(19) Europäisches Patentamt
European Patent Office
Office européen des brevets

(11) **EP 1 900 989 A1**

(12) **EUROPÄISCHE PATENTANMELDUNG**

(43) Veröffentlichungstag:
**19.03.2008 Patentblatt 2008/12**

(51) Int Cl.:
*F16L 9/00* (2006.01)    *F16L 11/12* (2006.01)
*F28F 1/40* (2006.01)    *F24J 3/08* (2006.01)

(21) Anmeldenummer: 06019132.7

(22) Anmeldetag: **13.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Dipl.-Ing. Dr. Ernst Vogelsang GmbH & Co. KG**
**D-45699 Herten (DE)**

(72) Erfinder: **Vogelsang, Horst**
**45699 Herten (DE)**

(74) Vertreter: **Nunnenkamp, Jörg et al**
**Patentanwälte,**
**Andrejewski,Honke & Sozien,**
**Theaterplatz 3,**
**Postfach 10 02 54**
**45127 Essen (DE)**

Bemerkungen:
Geänderte Patentansprüche gemäss Regel 137(2) EPÜ.

(54) **Wärmeleit-Kunststoffrohr zur Führung eines Fluids**

(57) Gegenstand der vorliegenden Erfindung ist ein Kunststoffrohr (3) zur Führung eines Fluids (6), insbesondere ein Wärmeleit-Kunststoffrohr, welches sich vorzugsweise für die Nutzung geothermischer Energie eignet. Das Kunststoffrohr (3) verfügt über eine Rohraußenfläche (3a) und eine Rohrinnenfläche (3b) geringerer Größe. Erfindungsgemäß weist die Rohrinnenfläche (3b) wenigstens ein Flächenvergrößerungsmittel (8) auf.

*Fig.2*

EP 1 900 989 A1

Printed by Jouve, 75001 PARIS (FR)

**Beschreibung**

Die Erfindung betrifft ein Kunststoffrohr zur Führung eines Fluids, insbesondere ein Wärmeleit-Kunststoffrohr, vorzugsweise zur Nutzung geothermischer Energie, mit einer Rohraußenfläche und einer Rohrinnenfläche geringerer Größe.

Kunststoffrohre werden allgemein im Kanalbau oder auch bei der Verlegung von Wasserleitungen eingesetzt. Das lässt sich primär auf ihr geringes Gewicht und die einfache Verlegung zurückführen. Außerdem sind Kunststoffrohre aufgrund ihrer Korrosionsbeständigkeit für die beschriebenen Verwendungszwecke prädestiniert. Die eingesetzten Kunststoffrohre verfügen allgemein über eine zylindrische Gestalt, wobei allerdings auch andere Formen denkbar sind und umfasst werden.

In neuerer Zeit kommen zunehmend Kunststoffrohre in Gestalt von Wärmeleit-Kunststoffrohren zum Einsatz, um beispielsweise die unterhalb der Oberfläche der festen Erde gespeicherte Wärme als geothermische Energie zu nutzen. Ein Beispiel für ein solches Kunststoffrohr wird in der US-PS 5 630 447 vorgestellt. Hier ist eine gleichsam Zwei-Rohr-Konfiguration realisiert. Als Fluid kommt eine Wärmeleitflüssigkeit zum Einsatz.

Sofern die bekannten Kunststoffrohre beispielsweise nach der US-PS 5 630 447 oder auch gemäß JP 05 223 356 A als gleichsam Wärmetauscher zum Einsatz kommen, indem die Erdwärme auf das im Kunststoffrohr geführte Fluid übertragen wird, ergeben sich in der Praxis Verbesserungsmöglichkeiten hinsichtlich des Wärmeübergangs. Tatsächlich lassen sich bereits die ersten einhundert Meter Tiefe unterhalb der Erdoberfläche geothermisch nutzen, obwohl dort nur Temperaturen von ca. 8 °C bis 12 °C herrschen. Denn hierzu ist es praktisch nur erforderlich, mit Hilfe einer Wärmepumpe die notwendigen höheren Temperaturen im Fluid zu erzeugen, um hiermit beispielsweise eine Niedrigtemperaturheizung in einem Gebäude zu beaufschlagen.

Zu diesem Zweck werden die Kunststoffrohre beispielsweise in einer Tiefe von ca. 80 cm bis 160 cm mäanderförmig und horizontal im Erdboden verlegt (Erdwärmekollektoren). Über das in den Kunststoffrohren zirkulierende Fluid wird dem Boden die Wärme entzogen und mittels der Wärmepumpe auf das benötigte Temperaturniveau angehoben. Bei dem Fluid handelt es sich regelmäßig um eine bestimmte Flüssigkeit, wenngleich grundsätzlich auch ein Gas möglich ist.

Darüber hinaus kennt man Erdwärmesonden, bei denen die fraglichen Kunststoffrohre in senkrechten Bohrungen von meist 30 m bis 150 m Tiefe installiert werden. Die mit dem Fluid gefüllten Erdwärmesonden heizen oder kühlen in Verbindung mit der Wärmepumpe einzelne Gebäude. Selbstverständlich kann die geothermische Energie grundsätzlich auch zur Stromerzeugung genutzt werden oder lässt sich beispielsweise Thermalwasser zur Fernwärmenutzung über eine Tiefenbohrung an die Oberfläche fördern, abkühlen und über eine weitere Bohrung wieder in den Untergrund zurückleiten.

Bei diesen sämtlichen Anwendungsfällen kommt es u.a. wesentlich auf die Fähigkeit der eingesetzten Kunststoffrohre an, die vom Erdboden, einer wasserführenden Schicht etc. abgegebene Wärme möglichst schnell und effektiv auf das im Kunststoffrohr geführte Fluid bzw. die hier vorgesehene Wärmeleitflüssigkeit zu übertragen. Bekanntermaßen hängt der Wärmeübergang $\Phi$, also der Wärmeaustausch zwischen einer festen Wand und einem Fluid (Flüssigkeit oder Gas) direkt proportional von der zugehörigen Kontaktfläche F ab, d.h. es gilt,

$$\Phi \propto F.$$

Unter der Voraussetzung, dass überwiegend im Querschnitt kreisförmige bzw. zylindrische Kunststoffrohre zum Einsatz kommen, lassen sich die Kontaktflächen F, also einerseits die Rohraußenfläche und andererseits die Rohrrinnenfläche berechnen und sind ihrerseits proportional zum jeweiligen Kreisumfang bzw. zugehörigen Durchmesser D. D.h., es gilt:

$$F \propto D.$$

Damit ist der Wärmeübergang $\Phi$ aber eine direkte Funktion des Durchmessers D der jeweiligen Rohrrinnenfläche bzw. der Rohraußenfläche im Sinne von

$$\Phi \propto D.$$

Als Folge hiervon stellen sich natürlich unterschiedliche Wärmeübergänge von einerseits dem äußeren Erdboden auf die Rohraußenfläche und andererseits von der Rohrrinnenfläche auf das im Innern des Kunststoffrohres geführte Fluid ein (wenn andere Effekte vernachlässigt werden). Da der Innendurchmesser $D_i$ (bei angenommenem kreisförmigen Kunststoffrohr) kleiner als der Außendurchmesser $D_a$ ist und folglich die Rohrrinnenfläche kleiner als die Rohraußenfläche, liegen unterschiedliche Wärmeübergänge $\Phi$ vor, die bisher in der Praxis keine Berücksichtigung gefunden haben. Hier setzt die Erfindung ein.

Der Erfindung liegt das technische Problem zugrunde, ein Kunststoffrohr zur Führung eines Fluids der eingangs beschriebenen Ausgestaltung so weiter zu entwickeln, dass der Wärmeübergang verbessert ist und folglich das Kunststoffrohr eine größere Wärmeleitfähigkeit besitzt.

Zur Lösung dieser technischen Problemstellung ist ein gattungsgemäßes Kunststoffrohr zur Führung eines Fluids, insbesondere ein Wärmeleit-Kunststoffrohr, dadurch gekennzeichnet, dass die Rohrinnenfläche wenigstens ein Flächenvergrößerungsmittel aufweist.

Das Flächenvergrößerungsmittel sorgt regelmäßig dafür, dass die Rohrinnenfläche um wenigstens 5%, insbesondere mehr als 10% und vorzugsweise um mehr als 20% vergrößert wird, und zwar im Vergleich zu einer beispielsweise glatten Zylinderinnenoberfläche. Ganz besonders bevorzugt ist eine Variante, bei welcher das Flächenvergrößerungsmittel so bemessen wird, dass sich die Rohrinnenfläche und die Rohraußenfläche von ihrer Größe her im Wesentlichen entsprechen. Hiermit ist im Rahmen der Erfindung gemeint, dass die Rohrinnenfläche und die Rohraußenfläche größenmäßig gleich sind, und zwar bis auf eine Abweichung im Bereich von ca. 10%, vorzugsweise weniger als 5%.

Da es sich bei den Kunststoffrohren bevorzugt um solche mit kreisförmigem Querschnitt handelt, lässt sich das Verhältnis der Rohraußenfläche zur Rohrinnenfläche - wie einleitend bereits dargelegt, - durch das Durchmesserverhältnis ausdrücken. Berücksichtigt man beispielsweise und nicht einschränkend einen Rohraußendurchmesser von ca. 40 mm und einen Rohrinnendurchmesser von ca. 32 mm bei einer dazu korrespondierenden Wandstärke von ca. 4 mm, so beträgt das Durchmesserverhältnis Außendurchmesser/Innendurchmesser ca. 1,25. D.h., dass die Rohraußenfläche um in etwa 25% größer als die Rohrinnenfläche bemessen ist. Das gilt jedenfalls unter der Voraussetzung, dass die Rohraußenfläche als im Wesentlichen glatte Zylinderaußenoberfläche ausgeführt ist und die Rohrinnenfläche als korrespondierende und ebenfalls im Wesentlichen glatte Zylinderinnenoberfläche.

Um hier einen Ausgleich zu schaffen, ist das Flächenvergrößerungsmittel an der Rohrinnenfläche vorgesehen und sorgt dafür, dass die Differenz zwischen Rohrinnenfläche und Rohraußenfläche im Beispielfall auf weniger als 20% reduziert wird, weil das Flächenvergrößerungsmittel die Rohrinnenfläche um zumindest 5% oder noch mehr vergrößert. Das gilt jedenfalls solange, wie die Rohraußenfläche unverändert bleibt. Selbstverständlich kann auch die Rohraußenfläche mit einem oder mehreren Flächenvergrößerungsmitteln, beispielsweise einer gerippten oder gewellten Oberfläche ausgerüstet werden. Dann ist das Flächenvergrößerungsmittel der Rohrinnenfläche entsprechend größer zu dimensionieren.

Im Rahmen der besonders bevorzugten Ausgestaltung nach Anspruch 3 sorgt das Flächenvergrößerungsmittel sogar dafür, dass die Rohrinnenfläche um ca. 25% im Beispielfall vergrößert ist, so dass die Rohrinnenfläche plus Flächenvergrößerungsmittel von ihrer Größe her der Rohraußenfläche im Wesentlichen entsprechen.

Mit Hilfe des Flächenvergrößerungsmittels an der Rohrinnenfläche wird folglich der Wärmeübergang von einerseits dem Erdboden oder einer Umgebung auf die Rohraußenfläche und andererseits von der Rohrinnenfläche auf das im Rohr geführte Fluid vergleichmäßigt. Das gleiche gilt selbstverständlich auch bei anderen Anwendungen des Kunststoffrohres, wenn dieses beispielsweise bei einer Fußbodenheizung zum Einsatz kommt und der Wärmefluss nicht von außen nach innen zum Fluid erfolgt, wie bei einer geothermischen Nutzung, sondern vielmehr dass Fluid Wärme nach außen abgibt und folglich der Wärmefluss umgekehrt ist. In jedem Fall verfügt das erfindungsgemäße Kunststoffrohr über eine deutlich gesteigerte Fähigkeit zum Wärmeaustausch, weil der Wärmeübergang von außen nach innen und umgekehrt die spezifischen geometrischen Verhältnisse, insbesondere den Durchmesserunterschied von Rohraußenfläche und Rohrinnenfläche berücksichtigt.

Es hat sich bewährt, wenn das Flächenvergrößerungsmittel adhäsiv, mittels einer Befestigungseinrichtung oder dergleichen an die Rohrinnenfläche angeschlossen ist. Beispielsweise mag das Flächenvergrößerungsmittel ebenfalls aus Kunststoff hergestellt und adhäsiv an die Rohrinnenfläche angeschlossen sein. Aus Gründen einer einfachen und kostengünstigen Fertigung empfiehlt die Erfindung jedoch regelmäßig, dass das Flächenvergrößerungsmittel einstückig mit dem Kunststoffrohr ausgebildet ist. Denn die erfindungsgemäßen Kunststoffrohre werden im Allgemeinen mit Hilfe eines Extrusionswerkzeuges hergestellt, welches im Wesentlichen aus einem Dorn und einem Spritzmundstück gebildet ist. In diesem Zusammenhang sei auf die DE 40 31 783 A1 der Anmelderin verwiesen, die ein zur Herstellung der fraglichen Kunststoffrohre geeignetes Strangpresswerkzeug bzw. Extrusionswerkzeug im Detail beschreibt.

Die einstückige Ausbildung des Flächenvergrößerungsmittels mit dem Rohr schließt selbstverständlich nicht aus, dass das Rohr einerseits und das Flächenvergrößerungsmittel andererseits aus verschiedenen Kunststoffen hergestellt werden können, beispielsweise aus PP und PE, die gemeinsam miteinander koextrudiert werden. In der Regel sind jedoch das Flächenvergrößerungsmittel und das Rohr aus dem gleichen Kunststoffmaterial hergestellt, bei dem es sich vorteilhaft um Polyethylen (PE) oder ein vergleichbares thermoplastischen Kunststoffmaterial handelt.

Das erfindungsgemäße Flächenvergrößerungsmittel übernimmt meistens nicht nur die Funktion, die Rohrinnenfläche zu vergrößern, sondern sorgt alternativ oder ergänzend dafür, dass in das im Innern des Kunststoffrohres geführte Fluid gezielt Turbulenzen eingetragen werden. Diese Turbulenzen sorgen für eine Temperaturvergleichmäßigung des Fluids, weil es während des Flusses des Fluids durch die Turbulenzen zu einem Austausch innerer und äußerer Fluidbereiche kommt und folglich im Idealfall über den Querschnitt des Rohres gesehen überall gleiche Temperaturen im Fluid herrschen und kein Temperaturgradient beobachtet wird.

Um diese Turbulenzen in das Fluid gezielt einbringen zu können, hat es sich bewährt, wenn das Flächenvergrößerungsmittel als wenigstens eine Innenlängs- und/oder -querrippe ausgeführt ist. Meistens sind mehrere über den Innenumfang des Kunststoffrohres und folglich die Rohrinnenfläche verteilt angeordnete Innenlängsrippen realisiert. Diese Innenlängsrippen verlaufen in Längsrichtung des Rohres gesehen nicht parallel zu dieser Längsrichtung, sondern winklig und zudem mit verschiedenen Winkeln gegenüber der Längsrichtung. Meistens wird ein wellenförmiger Verlauf oder ein solcher mit sich abwechselnden Schrägwinkeln gegenüber der Längsrichtung eingestellt, um auf diese Weise über die entlang der Rohrinnenfläche geführten Fluidbereiche gezielt Turbulenzen in das Fluid einzutragen.

Bei dem Fluid handelt es sich regelmäßig um eine Wärmeleitflüssigkeit, beispielsweise mit Gefrierschutzmittel versetztes Wasser, um Sole oder dergleichen. Gegenstand der Erfindung ist auch eine geothermische Energieerzeugungseinrichtung, wie sie im geltenden Anspruch 10 beschrieben wird.

Im Ergebnis wird ein neuartiges Kunststoffrohr zur Verfügung gestellt, welches sich für Zwecke des Wärmeaustausches zwischen dem im Innern geführten Fluid und der Umgebung, in die das Kunststoffrohr eingebettet ist, besonders eignet. Dieser Wärmeaustausch kann in beiden Richtungen vom Fluid auf die Umgebung oder zurück erfolgen. Immer sorgt das Flächenvergrößerungsmittel and der Rohrinnenfläche dafür, dass der Wärmeübergang vergleichmäßigt ist. Zusätzlich stellt das Flächenvergrößerungsmittel sicher, dass die Wärmeübertragung innerhalb des Fluids optimiert wird, weil dieses über eine homogene Temperaturverteilung über den Querschnitt des Kunststoffrohres gesehen verfügt. Das lässt sich auf die gezielt eingebrachten Turbulenzen mit Hilfe des Flächenvergrößerungsmittels zurückführen. Insgesamt wird ein Kunststoffrohr zur Verfügung gestellt, welches sich vorteilhaft zur Realisierung eines Wärmetauschers verwenden lässt. Dieser Wärmetauscher mag bei der geothermischen Energieerzeugung zum Einsatz kommen. Hierin sind die wesentlichen Vorteile zu sehen.

Im Folgenden wird die Erfindung anhand einer lediglich ein Ausführungsbeispiel darstellenden Zeichnung näher erläutert; es zeigen:

Fig. 1 Das erfindungsgemäße Kunststoffrohr in einer Anwendung zur Nutzung geothermischer Energie,

Fig. 2 das Kunststoffrohr im Querschnitt,

Fig. 3 das Kunststoffrohr im Längsschnitt schematisch, und

Fig. 4 die Rohraußenfläche des Kunststoffrohres.

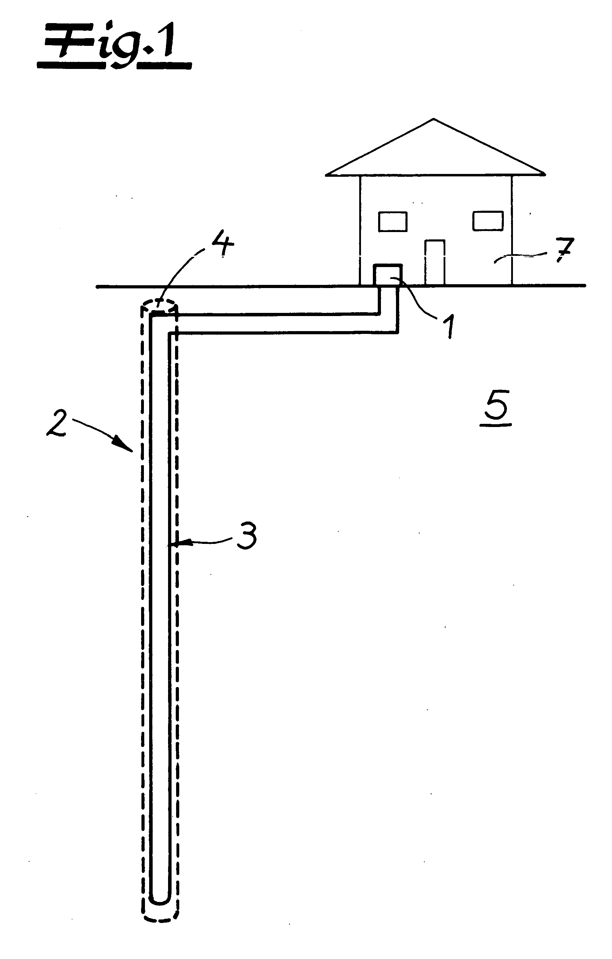

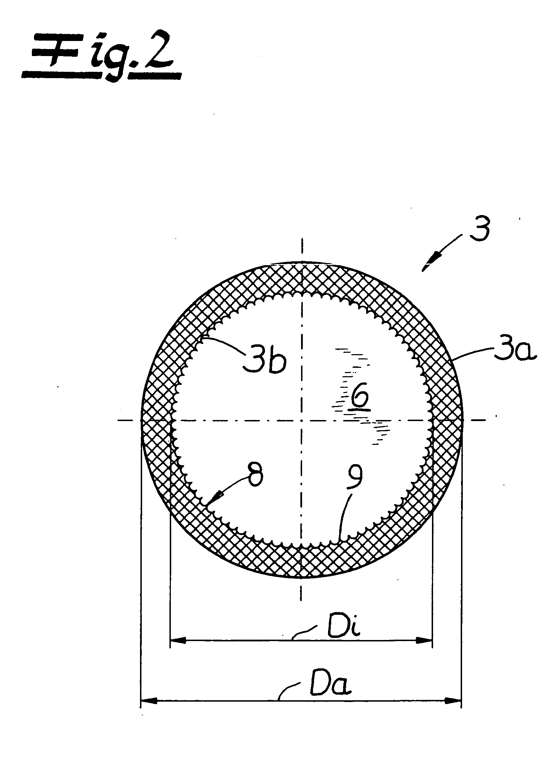

In der Fig. 1 ist eine geothermische Energieerzeugungseinrichtung dargestellt. Diese weist eine Wärmepumpe 1 und einen Wärmetauscher 2 auf, bei dem es sich um ein Kunststoffrohr 3 oder ein System aus Kunststoffrohren 3 handelt, wie sie in den Fig. 2 bis 4 im Detail dargestellt sind.

Die Fig. 1 zeigt die Nutzung geothermischer Energie mit Hilfe einer Erdwärmesonde, bei welcher das fragliche Kunststoffrohr 3 bzw. die mehreren Kunststoffrohre 3 senkrecht in eine Bohrung 4 im Erdboden 5 eingebracht worden sind. Durch die gleichsam in einem Vor- und Rücklauf verlegten Kunststoffrohre 3 wird ein Fluid 6 geführt, bei dem es sich im Rahmen des Ausführungsbeispiels und nicht einschränkend um eine Wärmeleitflüssigkeit, nämlich mit einem Gefrierschutzmittel versetztes Wasser, handelt.

Mit Hilfe der Wärmepumpe 1 wird das vom Erdboden 5 auf Temperaturen von ca. 8 bis 12 °C erwärmte Fluid 6 auf höhere Temperaturen gebracht, um ein in der Fig. 1 lediglich angedeutetes Gebäude 7 zu beheizen. Das ist grundsätzlich aus der Praxis bekannt.

Für die Erfindung von besonderer Bedeutung sind nun die speziellen Kunststoffrohre 3, bei denen es sich vorliegend um Wärmeleit-Kunststoffrohre handelt und welche in den Fig. 2 bis 4 im Detail dargestellt sind. Denn diese Kunststoffrohre 3 eignen sich besonders für die Nutzung geothermischer Energie. Dazu verfügt das jeweilige Kunststoffrohr 3 über eine zylindrische Rohraußenfläche 3a und eine zylindrische Rohrinnenfläche 3b geringerer Größe. Das lässt sich auf die unterschiedlichen Durchmesser $D_a$ und $D_i$ für den Außendurchmesser und den Innendurchmesser des jeweiligen Kunststoffrohres 3 zurückführen. Die Rohraußenfläche 3a ist im Wesentlichen als glatte Zylinderinnenoberfläche ausgebildet. Dagegen erfährt die größtenteils als Zylinderinnenoberfläche ausgestaltete Rohrinnenfläche 3b eine Modifikation, wie nachfolgend noch näher erläutert wird.

Denn um die unterschiedliche Größe von einerseits der Rohraußenfläche 3a und andererseits der Rohrinnenfläche 3b auszugleichen, schlägt die Erfindung vor, dass die Rohrinnenfläche 3b mit wenigstens einem Flächenvergrößerungsmittel 8 ausgerüstet ist. Dieses Flächenvergrößerungsmittel 8 sorgt im Kern dafür, dass der Größenunterschied zwischen der Rohraußenfläche 3a und der Rohrinnenfläche 3b mehr oder minder ausgeglichen wird. Tatsächlich stellt das Flächenvergrößerungsmittel 8 im Rahmen des Beispiels sicher, dass die Rohrinnenfläche 3b um ca. 20% gegenüber der Situation vergrößert ist, bei welcher kein Flächenvergrößerungsmittel 8 realisiert ist und folglich die Rohrinnenfläche 3b als glatte Zylinderinnenoberfläche mit kreisförmigem Querschnitt vorliegt. Bei dieser Betrachtung wird unterstellt, dass die Rohraußenfläche 3a als glatte Zylinderaußenoberfläche ausgeführt ist.

Aus dem Verhältnis

$$D_a / D_i$$

lässt sich ableiten, um wie viel Prozent die Rohraußenfläche 3a gegenüber der Rohrinnenfläche 3b größer ist und folglich das Flächenvergrößerungsmittel 8 entsprechend bemessen.

Man erkennt, dass das Flächenvergrößerungsmittel 8 einstückig mit dem Kunststoffrohr 3 ausgebildet ist, wobei Flächenvergrößerungsmittel 8 und Kunststoffrohr 3 in einem gemeinsamen Herstellungsprozess produziert werden, und zwar so, wie dies in der einleitend bereits angegebenen DE 40 31 783 A1 beschrieben wird. Als gemeinsames Kunststoffmaterial für das Flächenvergrößerungsmittel 8 und das Kunststoffrohr 3 empfiehlt die Erfindung einen thermoplastischen Kunststoff, insbesondere Polyethylen PE.

Im Detail ist das Flächenvergrößerungsmittel 8 als mehrere über den Innenumfang des Kunststoffrohres 3 bzw. dessen Rohrinnenfläche 3b verteilt angeordnete Innenlängsrippen 9 ausgebildet. Man erkennt anhand der Fig. 2, dass die Innenlängsrippen 9 im Querschnitt zackenförmig mit abgerundeten Dreieckszacken ausgebildet sind, was selbstverständlich keine zwingende Bedingung oder Einschränkung darstellt.

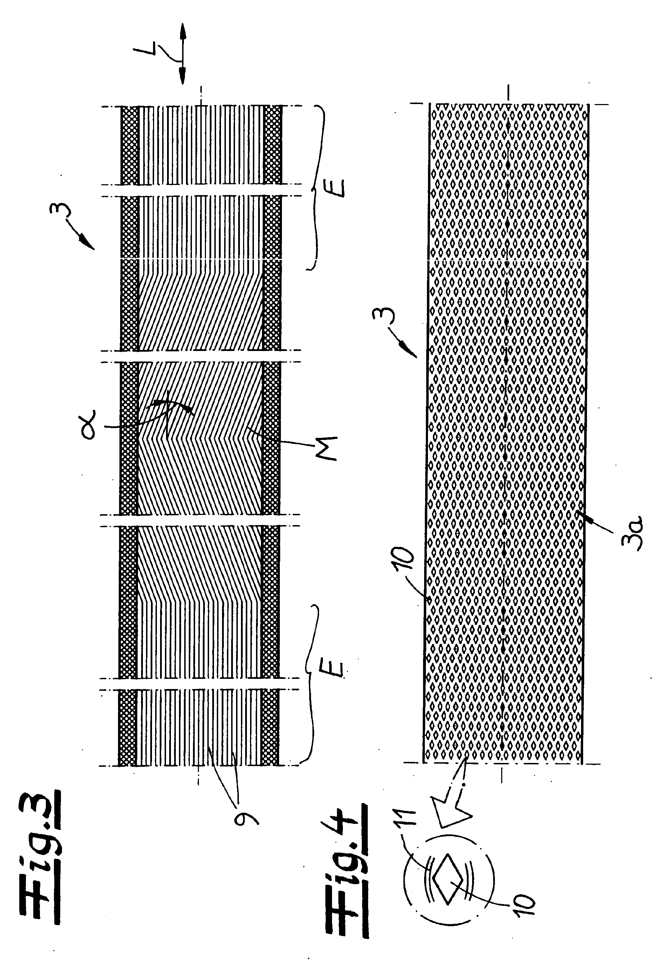

Die Innenlängsrippen 9 verlaufen ausweislich der Fig. 3 in Längsrichtung L des Kunststoffrohres 3, und zwar überwiegend nicht parallel zu dieser Längsrichtung L, sondern mit gegebenenfalls wechselnder Ausrichtung bzw. unter einem Schrägwinkel $\alpha$ gegenüber dieser Längsrichtung L. Der Schrägwinkel $\alpha$ liegt im Bereich von ca. 1° bis 60°, vorzugsweise zwischen 10° und 30°, im Allgemeinen bei in etwa 20°. Außerdem macht die Fig. 3 deutlich, dass beispielsweise im Bereich einer Mitte M des Kunststoffrohres 3 in Längsrichtung L die Innenlängsrippen 9 einer Richtungsumkehr unterworfen sind und in Endbereichen E des Kunststoffrohres 3 jeweils parallel zur Längsrichtung L angeordnet sind. Das ist selbstverständlich nicht zwingend und nur als Option anzusehen.

Jedenfalls sorgt die Schrägstellung der Innenlängsrippen 9 im Vergleich zur Längsrichtung L des Kunststoffrohres 3 und folglich auch der Fließrichtung des Fluids 6 dafür, dass in das Fluid 6 über die Innenlängsrippen 9 gezielt Turbulenzen eingetragen werden. Diese Turbulenzen führen dazu, dass das Fluid 6 über den gesamten Rohrinnenquerschnitt gesehen eine gleichmäßige Temperaturverteilung aufweist und folglich die Wärmeübertragung vom Erdboden 5 auf das Fluid 6 unter optimalen Bedingungen stattfindet.

Anhand der Fig. 4 erkennt man schließlich, dass die Rohraußenfläche 3a des Kunststoffrohres 3 mit Oberflächeneinprägungen 10 ausgerüstet ist, die rautenförmig, kreisförmig, rechteckig, quadratisch usw. gestaltet sein können. Die Oberflächeneinprägungen 10 erstrecken sich in der Rohraußenfläche 3a lediglich über eine Tiefe von weniger als 0,2 mm, um eine etwaige Rissbildung in der Rohraußenfläche 3a und/oder eine Rissfortpflanzung zu vermeiden. Durch die Oberflächeneinprägungen 10 verfügt die Rohraußenfläche 3a über eine gewünschte Rauigkeit, welche den Einbau der Kunststoffrohre 3 in den Erdboden 5 und ihre dortige Abdichtung erleichtert. Denn die Bohrung 4 im Erdboden 5 mit den darin eingebrachten Kunststoffrohren 3 wird in der Regel an der Erdoberfläche durch ein aushärtendes Verpressmaterial abgedichtet, welches zugleich für die Verankerung der Kunststoffrohre 3 in der Bohrung 4 sorgt. Damit nun dieses Verpressmaterial einwandfrei an der Rohraußenfläche 3a haftet bzw. mit dieser überhaupt eine Verbindung eingeht, sind die Oberflächeneinprägungen 10 vorgesehen.

Man erkennt, dass die Oberflächeneinprägungen 10 bei dem Kunststoffrohr 3 gleichmäßig über die Rohraußenfläche 3a verteilt angeordnet sind. Tatsächlich handelt es sich bei diesen Oberflächeneinprägungen 10 um Oberflächeneinprägungspunkte, die in Aufsicht im Rahmen des Ausführungsbeispiels rautenförmig gestaltet sind. Selbstverständlich sind auch kreisförmige, elliptische, rechteckförmige, quadratische oder andere geometrische Formen für die Oberflächeneinprägungen 10 bzw. Oberflächeneinprägungspunkte denkbar und werden von der Erfindung umfasst.

Die Oberflächeneinprägungen 10 verfügen über eine Eindringtiefe bzw. Eindrücktiefe von weniger als 0,3 mm, insbesondere eine solche von weniger als 0,25 mm und ganz besonders bevorzugt um eine Eindrücktiefe von weniger als 0,2 mm. Auf diese Weise wird gewährleistet, dass sich weder Risse an der Rohraußenfläche 3a bilden, noch es zu der bereits beschriebenen Rissfortpflanzung kommt oder kommen kann. Hierzu trägt auch der Umstand bei, dass die Oberflächeneinprägungen 10 mit Versatz zueinander in Längsrichtung L des Kunststoffrohres 3 angeordnet sind.

Den Oberflächeneinprägungen 10 sind in der vergrößerten Darstellung nach Fig. 4 jeweils Oberflächenauswölbungen 11 zugeordnet, die sich durch die Materialverdrängung beim Prägevorgang erklären. Die Oberflächenauswölbungen 11 können jeweils beidseitig der Oberflächeneinprägungen 10 oder auch nur einseitig hiervon angeordnet sein. Die Oberflächenauswölbungen 11 verfügen über eine Wölbungshöhe von zumeist weniger als 0,2 mm. Dadurch wird eine insgesamt wellige Oberfläche an der Rohraußenfläche 3a zur Verfügung gestellt, die über eine Welligkeit von ca. 0,4 mm verfügt, wenn man die maximale Wölbungshöhe von ca. 0,2 mm mit der Eindrücktiefe bzw. Eindringtiefe von ca. 0,2 mm kombiniert. - Bei den zuvor erläuterten Überlegungen hinsichtlich des Flächenvergrößerungsmittels 8 ist unterstellt worden, dass die Rohraußenfläche 3a im Wesentlichen glatt ausgebildet ist, was in Anbetracht der geringen Welligkeit der Rohraußenfläche 3a eine zulässige Annahme darstellt.

Die Oberflächeneinprägungen 10 werden in der Regel mittels eines gegenläufig zum Kunststoffrohr 3 rotierenden und nicht ausdrücklich dargestellten Prägestempels in die Rohraußenfläche 3a eingebracht. Dieser Prägestempel mag sich ausgangsseitig bzw. außerhalb des verwendeten Extruderwerkzeuges befinden. Dadurch verfügt das extrudierte Kunststoffrohr 3 über eine Temperatur, welche ein Verschmieren des PE an der Rohraußenfläche 3a beim Prägen verhindert.

**Patentansprüche**

1. Kunststoffrohr (3), zur Führung eines Fluids (6), insbesondere Wärmeleit-Kunststoffrohr, vorzugsweise für die Nutzung geothermischer Energie, mit einer Rohraußenfläche (3a) und einer Rohrinnenfläche (3b) geringerer Größe, **dadurch gekennzeichnet, dass** die Rohrinnenfläche (3b) wenigstens ein Flächenvergrößerungsmittel (8) aufweist.

2. Kunststoffrohr (3) nach Anspruch 1, **dadurch gekennzeichnet, dass** das Flächenvergrößerungsmittel (8) die Rohrinnenfläche (3b) um wenigstens 5%, insbesondere mehr als 10% und vorzugsweise um mehr als 20% im Vergleich zu beispielsweise einer glatten Zylinderinnenoberfläche vergrößert.

3. Kunststoffrohr (3) nach Anspruch 1 oder 2, **dadurch gekennzeichnet, dass** das Flächenvergrößerungsmittel (8) so bemessen ist, dass sich die Rohrinnenfläche (3b) und die Rohraußenfläche (3a) von ihrer Größe her im Wesentlichen entsprechen.

4. Kunststoffrohr (3) nach einem der Ansprüche 1 bis 3, **dadurch gekennzeichnet, dass** das Flächenvergrößerungsmittel (8) adhäsiv, mittels einer Befestigungseinrichtung oder dergleichen, an die Rohrinnenfläche (3b) angeschlossen ist.

5. Kunststoffrohr (3) nach einem der Ansprüche 1 bis 4, **dadurch gekennzeichnet, dass** das Flächenvergrößerungsmittel (8) einstückig mit dem Kunststoffrohr (3) ausgebildet ist.

6. Kunststoffrohr (3) nach einem der Ansprüche 1 bis 5, **dadurch gekennzeichnet, dass** das Flächenvergrößerungsmittel (8) und das Kunststoffrohr (3) aus dem gleichen Kunststoffmaterial hergestellt sind.

7. Kunststoffrohr (3) nach einem der Ansprüche 1 bis 6, **dadurch gekennzeichnet, dass** das Flächenvergrößerungsmittel (8) als wenigstens eine Innenlängsrippe (9) und/oder Innenquerrippe ausgebildet ist.

8. Kunststoffrohr (3) nach einem der Ansprüche 1 bis 7, **dadurch gekennzeichnet, dass** mehrere über die Rohrinnenfläche (3b) des Kunststoffrohres (3) verteilt angeordnete Innenlängsrippen (9) realisiert sind.

9. Kunststoffrohr (3) nach einem der Ansprüche 1 bis 8, **dadurch gekennzeichnet, dass** das Flächenvergrößerungsmittel (8) so ausgelegt ist, dass in das Fluid (6) gezielt Turbulenzen zur Temperaturvergleichmäßigung eingetragen werden.

10. Geothermische Energieerzeugungseinrichtung, mit einer Wärmepumpe (1) und einem Wärmetauscher (2), **dadurch gekennzeichnet, dass** der Wärmetauscher (2) aus einem oder mehreren Kunststoffrohren (3) nach einem der Ansprüche 1 bis 9 aufgebaut ist.

**Geänderte Patentansprüche gemäss Regel 137(2) EPÜ.**

1. Verwendung eines Kunststoffrohres (3) zur Führung eines Fluids (6) bei der Realisierung eines Wärmetauschers für die geothermische Energieerzeugung, mit einer Rohraußenfläche (3a) und einer Rohrinnenfläche (3b) geringerer Größe, wobei die Rohrinnenfläche (3b) wenigstens ein Flächenvergrößerungsmittel (8) in Gestalt von mehreren über die Rohrinnenfläche (3b) des Kunststoffrohres (3) verteilt angeordneten Innenlängsrippen (9) aufweist, **dadurch gekennzeichnet,dass** die Innenlängsrippen (9) überwiegend nicht parallel zur Längsrichtung (L) des Kunststoffrohres (3) verlaufen, sondern mit wechselnder Ausrichtung gegenüber der Längsrichtung (L), um in das Fluid (6) gezielt Turbulenzen zur Temperaturvergleichmäßigung einzutragen.

2. Verwendung nach Anspruch 1, **dadurch gekennzeichnet, dass** das Flächenvergrößerungsmittel (8) die Rohrinnenfläche (3b) um wenigstens 5%, insbesondere mehr als 10% und vorzugsweise um mehr als 20% im Vergleich zu beispielsweise einer glatten Zylinderinnenoberfläche vergrößert.

3. Verwendung nach Anspruch 1 oder 2, **dadurch gekennzeichnet, dass** das Flächenvergrößerungsmittel (8) so bemessen ist, dass sich die Rohrinnenfläche (3b) und die Rohraußenfläche (3a) von ihrer Größe her im Wesentlichen entsprechen.

4. Verwendung nach einem der Ansprüche 1 bis 3, **dadurch gekennzeichnet, dass** das Flächenvergrößerungsmittel (8) adhäsiv, mittels einer Befestigungseinrichtung oder dergleichen, an die Rohrinnenfläche (3b) angeschlossen ist.

5. Verwendung nach einem der Ansprüche 1 bis 4, **dadurch gekennzeichnet, dass** das Flächenvergrößerungsmittel (8) einstückig mit dem Kunststoffrohr (3) ausgebildet ist.

6. Verwendung nach einem der Ansprüche 1 bis 5, **dadurch gekennzeichnet, dass** das Flächenvergrößerungsmittel (8) und das Kunststoffrohr (3) aus dem gleichen Kunststoffmaterial hergestellt sind.

**7.** Geothermische Energieerzeugungseinrichtung, mit einer Wärmepumpe (1) und einem Wärmetauscher (2), wobei der Wärmetauscher (2) aus einem oder mehreren Kunststoffrohren (3) mit einer Rohraußenfläche (3a) und einer Rohrinnenfläche (3b) geringerer Größe aufgebaut ist und wobei die Rohrinnenfläche (3b) wenigstens ein Flächenvergrößerungsmittel (8) in Gestalt von mehreren über die Rohrinnenflächen (3b) des Kunststoffrohrs (3) verteilt angeordneten Innenlängsrippen (9) aufweist, **dadurch gekennzeichnet, dass** die Innenlängsrippen (9) überwiegend nicht parallel zur Längsrichtung (L) des Kunststoffrohres (3) verlaufen, sondern mit wechselnder Ausrichtung gegenüber der Längsrichtung (L), um in das Fluid (6) gezielt Turbulenzen zur Temperaturvergleichmäßigung einzutragen.

# Fig.1

Fig.2

_Fig.3_

_Fig.4_

EP 1 900 989 A1

**Europäisches Patentamt**

# EUROPÄISCHER RECHERCHENBERICHT

**Nummer der Anmeldung**

EP 06 01 9132

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 92/19900 A (PEST MEGYEI MUEANYAGIPARI [HU]) 12. November 1992 (1992-11-12) * Seite 5 - Seite 6; Abbildungen * ----- | 1-9 | INV. F16L9/00 F16L11/12 F28F1/40 F24J3/08 |
| X | JP 2006 234340 A (KIMURA KOHKI CO) 7. September 2006 (2006-09-07) * Absatz [0006]; Abbildung 4b * ----- | 1-3,5-10 | |
| X | US 5 224 357 A (GALIYANO MIKE P [US] ET AL) 6. Juli 1993 (1993-07-06) * Spalte 10, Zeile 34 - Zeile 39 * * Spalte 11, Zeile 1 - Zeile 51; Abbildungen 3a,5 * ----- | 1-3,5-8, 10 | |
| X | CA 2 199 342 A1 (GODDARD RALPH SPENCER [CA]; GODDARD BRADLEY JOHN SPENCER [CA]; ULLRICH) 6. September 1998 (1998-09-06) * Seite 4, Zeile 13 - Seite 5, Zeile 15; Abbildungen * ----- | 1-3,5-9 | |
| X | JP 2006 200848 A (KIMURA KOHKI CO) 3. August 2006 (2006-08-03) * Absatz [0008]; Abbildung 3b * ----- | 1-3,5-8, 10 | RECHERCHIERTE SACHGEBIETE (IPC) |
| D,A | DE 40 31 783 A1 (VOGELSANG ERNST GMBH CO KG [DE]) 9. April 1992 (1992-04-09) * Zusammenfassung * ----- | 1 | F16L F24J F28F F15D F24D |

Der vorliegende Recherchenbericht wurde für alle Patentansprüche erstellt

| Recherchenort | Abschlußdatum der Recherche | Prüfer |
|---|---|---|
| Berlin | 23. Februar 2007 | Axelsson, Torbjörn |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 9132

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-02-2007

| Im Recherchenbericht angeführtes Patentdokument | | Datum der Veröffentlichung | Mitglied(er) der Patentfamilie | | Datum der Veröffentlichung |
|---|---|---|---|---|---|
| WO 9219900 | A | 12-11-1992 | AT<br>DE<br>EP<br>HU | 123858 T<br>59202524 D1<br>0537319 A1<br>3679 A1 | 15-06-1995<br>20-07-1995<br>21-04-1993<br>28-09-1993 |
| JP 2006234340 | A | 07-09-2006 | KEINE | | |
| US 5224357 | A | 06-07-1993 | KEINE | | |
| CA 2199342 | A1 | 06-09-1998 | KEINE | | |
| JP 2006200848 | A | 03-08-2006 | KEINE | | |
| DE 4031783 | A1 | 09-04-1992 | KEINE | | |

EPO FORM P0461

Für nähere Einzelheiten zu diesem Anhang : siehe Amtsblatt des Europäischen Patentamts, Nr.12/82

**EP 1 900 989 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5630447 A
- JP 05223356 A
- DE 4031783 A1